# EUROPÄISCHE PATENTSCHRIFT

(11) **EP 3 458 740 B1**
(45) Veröffentlichungstag und Bekanntmachung des Hinweises auf die Patenterteilung: **21.04.2021**
(21) Anmeldenummer: 17727117.8
(22) Anmeldetag: 15.05.2017
(51) Int. Cl.: F16F 9/54, F16F 9/58, B60G 13/00

(54) **EINROHRSCHWINGUNGSDÄMPFER UND EIN DOMLAGER FÜR KRAFTFAHRZEUGE**
SINGLE TUBE DAMPER AND DOME BEARING FOR MOTOR VEHICLES
AMORTISSEUR MONOTUBE ET PALIER DE JAMBE ÉLASTIQUE POUR VÉHICULES MOTORISÉS

(30) Priorität: 17.05.2016 DE 102016208418
(43) Veröffentlichungstag der Anmeldung: 27.03.2019
(73) Patentinhaber: ThyssenKrupp Bilstein GmbH, 58256 Ennepetal (DE); thyssenkrupp AG, 45143 Essen (DE)
(72) Erfinder: BECKER, Matthias, 58730 Fröndenberg (DE); SPRENGER, Frank, 59075 Hamm (DE); KNÜPPEL, Peter, 58285 Gevelsberg (DE)
(74) Vertreter: thyssenkrupp Intellectual Property GmbH
(86) Internationale Anmeldenummer: PCT/EP2017/061573
(87) Internationale Veröffentlichungsnummer: WO 2017/198594

(56) Entgegenhaltungen:
- WO-A1-03/020541
- DE-A1-102007 020 136
- DE-C1- 4 409 661
- FR-A2- 2 335 747
- US-A- 5 265 902
- US-B1- 9 162 548

## Beschreibung

Die vorliegende Erfindung betrifft einen Einrohrschwingungsdämpfer für Kraftfahrzeuge.

### Stand der Technik

Einrohrschwingungsdämpfer und Domlageranordnungen dieser Bauart sind im Stand der Technik in einer Vielzahl von Ausführungsformen bekannt.

Ein Einrohrschwingungsdämpfer, insbesondere auch Einrohrdämpfer, umfasst ein Dämpferrohr, auch Arbeitszylinder genannt, einen Arbeitskolben und einen Trennkolben. Der Trennkolben trennt im Dämpferrohr Öl und Gas voneinander. Aufgrund dieses Gaspolsters werden Einrohrschwingungsdämpfer beispielsweise auch als Gasdämpfer bezeichnet. Die Gaskammer dient zum Volumen- und Temperaturausgleich. Durch die Trennung von Öl- und Gasraum ist die Einbaulage beliebig, wie beispielsweise ein Upside-Down-Einbau. Bei dem Einrohr-Prinzip drückt der bewegliche Trennkolben beim Einfahren der Kolbenstange (Druckstufe) das Gaspolster um das der Kolbenstange entsprechende Ölvolumen zusammen und beim Ausfahren der Kolbenstange (Zugstufe) drückt das Stickstoffgas den Trennkolben wieder zurück. Die Dämpfung der Schwingung erfolgt in beiden Richtungen über den Arbeitskolben, welcher insbesondere ein mehrstufiges Kolbenventil aufweist. Im Gegensatz zum Zweirohrdämpfer hat die Einrohrausführung kein zusätzliches koaxial angeordnetes Behälterrohr.

Ein Domlager, insbesondere auch als Federbeinlager bezeichnet, ist ein Teil des Fahrwerks von Kraftfahrzeugen. Es befindet sich oberhalb der Feder am Federbein. Das Domlager verbindet das Federbein, umfassend den Schwingungsdämpfer, mit der Karosserie. Zudem sind Domlager ein wichtiges Konstruktionselement der Achsaufhängung und tragen dazu bei, dass ein optimaler Kontakt zwischen Reifen und Straßenoberfläche erfolgt. Des Weiteren steigern Domlager den Komfort, indem sie Abroll- und Straßengeräusche von der Karosserie isolieren.

Aus der EP 1 842 701 A1 ist ein Domlager für Zweirohrdämpfer bekannt.

Problematisch bei den im Stand der Technik bekannten Ausführungsformen ist, dass im Fahrbetrieb des Kraftfahrzeugs Abroll- und Straßengeräusche von der Karosserie nicht ausreichend isoliert werden, so dass oftmals störende Schlag- und/oder Quietschgeräusche auftreten. Des Weiteren ist eine Verschlechterung der Fahreigenschaften, aufgrund der großen Krafteinleitung, wobei sich in das Domlager eingeleitete Dämpfungskräfte und Pufferkräfte addieren, festzustellen. Insbesondere ist diese Veränderung auf die komfortable Auslegung von Seriendomlagern zurückzuführen.

FR 2 335 747 A2 beschreibt einen Schwingungsdämpfer mit einem Anschlagteller, der an einem kolbenstangenfernen Ende angeordnet ist. Der Anschlagteller ist durch ein Dämpfungselement klemmend zwischen einer Auflagefläche am kolbenstangenfernen Ende und einer Anschlagfläche am Domlager fixiert. Das Dämpfungselement füllt dabei den gesamten Raum zwischen dem Anschlagteller und der Anschlagfläche aus. Nachteilig bei dieser Gestaltung ist es, dass das Dämpfungselement relativ dick gestaltet sein muss und insofern ein hoher Materialeinsatz erforderlich ist. Ferner ist das Dämpfungselement dauerhaft belastet, was sich negativ auf die Dauerfestigkeit desselben und somit auf die Lebensdauer des gesamten Schwingungsdämpfers insgesamt auswirkt. Einen ähnlichen Schwingungsdämpfer mit denselben Nachteilen offenbart DE 44 09 661 C1.

Der vorliegenden Erfindung liegt daher die Aufgabe zugrunde, einen verbesserten Einrohrschwingungsdämpfer bereitzustellen, bei welchem die zuvor genannten Nachteile vermieden werden. Insbesondere soll mit diesem verbesserten Einrohrschwingungsdämpfer ein Fahrverhalten ohne störende Schlag- und/oder Quietschgeräusche, insbesondere eine Geräuschunterdrückung, zur Verfügung gestellt werden. Des Weiteren soll im Fahrbetrieb ein direkterer, kompakterer und sportlicherer Fahreindruck ermöglicht werden.

### Aufgabe der Erfindung

Diese Aufgabe wird mit einem Einrohrschwingungsdämpfer nach Anspruch 1 gelöst.

Der erfindungsgemäße Einrohrschwingungsdämpfer weist gegenüber konventionellen Einrohrschwingungsdämpfern den Vorteil auf, dass eine optimierte Krafteinleitung in das Domlager erfolgt, wobei sich insbesondere die Fahreigenschaften verbessern und sich beispielsweise direktes Fahrgefühl ergibt.

Das Domlager weist gegenüber konventionellen Domlageranordnungen den Vorteil auf, dass eine optimierte Krafteinleitung in das Domlager erfolgt, wobei das Domlager entlastet wird und Kraft-/ Spannungsspitzen beispielsweise beim Durchfahren eines Schlaglochs minimiert werden können.

Der erfindungsgemäße Einrohrschwingungsdämpfer für ein Kraftfahrzeug umfasst
- ein mindestens teilweise mit Dämpfungsflüssigkeit gefülltes Dämpferrohr, in dem eine Kolbenstange hin und her bewegbar ist, wobei mit der Kolbenstange ein Arbeitskolben mitbewegbar ist,
- ein kolbenstangenfernes Ende des Einrohrschwingungsdämpfers zum Lagern in einem Domlager, wobei das kolbenstangenferne Ende des Einrohrschwingungsdämpfers einen Übergangsbereich von dem Außendurchmesser des Dämpferrohrs zu dem Außendurchmesser des kolbenstangenfernen Ende des Einrohrschwingungsdämpferss aufweist,
wobei das kolbenstangenferne Ende des Einrohrschwingungsdämpfers einen in dem Übergangsbereich angeordneten Auflagebereich aufweist und der Einrohrschwingungsdämpfer zusätzlich einen Anschlagteller und mindestens ein Dämpfungselement umfasst, wobei der Anschlagteller an dem Auflagebereich angeordnet ist und das mindestens eine Dämpfungselement an dem Anschlagteller auf der dem kolbenstangenfernen Ende des Einrohrschwingungsdämpfers zugewandten Seite angeordnet ist.

Ein weiterer Gegenstand ist ein Domlager zum Lagern des kolbenstangenfernen Ende eines Einrohrschwingungsdämpfers für ein Kraftfahrzeug in dem Domlager, wobei das Domlager eine Befestigungsvorrichtung zur elastisch lagernden Befestigung des kolbenstangenfernen Ende des Einrohrschwingungsdämpfers in dem Domlager und eine Anschlagfläche aufweist, wobei das mindestens eine Dämpfungselement an dem Anschlagteller des Einrohrschwingungsdämpfers auf der dem kolbenstangenfernen Ende des Einrohrschwingungsdämpfers zugewandten Seite angeordnet und die Anschlagfläche zum Anschlagen des mindestens einen Dämpfungselements auf der dem des Dämpfungselements gegenüberliegenden Seite angeordnet ist.

### Detaillierte Beschreibung der Erfindung

In einer bevorzugten Ausführungsform ist das Domlager ein dreipfadiges Domlager.

Im Rahmen der vorliegenden Erfindung wird unter dreipfadig einer Lagerung in drei Pfaden verstanden. Beispielsweise ist ein erster Pfad die Lagerung einer Feder, insbesondere einer Spiralfeder an einer an dem Domlager angeordneten Federtelleraufnahme. Beispielsweise ist ein zweiter Pfad die Lagerung, insbesondere elastische Lagerung eines Federbeinendes in dem Domlager. Beispielsweise ist ein dritter Pfad die Lagerung einer Druckanschlagfeder mit einem Ende an einem Anschlag in dem Domlager. Nach einer Kraftspezifischen Unterscheidung hat ein dreipfadiges Domlager beispielsweise die Besonderheit, dass die drei unterscheidbaren Kräfte: Dämpfungskräfte, Druckanschlagkräfte und Federkräfte, welche insbesondere bei einem Mc Pherson Achsbein auftreten, dezentral in das Domlager eingeleitet werden. Insbesondere werden die Dämpfungskräfte über das Kopflager eingeleitet, die Druckanschlagkräfte über die Anschlagfläche des Domlagers und die Federkräfte über das Federlager.

In einer bevorzugten Ausführungsform der Erfindung ist der Einrohrschwingungsdämpfer in einer Upside-Down-Position in einem Kraftfahrzeug angeordnet.
Ein Übergangsbereich im Rahmen der vorliegenden Erfindung ist beispielsweise ausgewählt unter einer Schulter, einer Flanke, einem Sprengring, einer Fase, einer Schräge, einem trapezförmigen Übergang oder Kombination hiervon.

Unter einem Dämpfungselement wird im Rahmen der vorliegenden Erfindung ein Element verstanden, welches Kräfte, die von dem an das Dämpfungselement angeordneten Anschlagteller übertragen werden, gedämpft an einer Anschlagsfläche des Domlagers weitergegeben werden. Des Weiteren kann das Dämpfungselement im Fahrbetrieb des Kraftfahrzeugs Abroll- und Straßengeräusche gegenüber der Karosserie isolieren. Beispielsweise kann ein Dämpfungselement ausgewählt sein unter einem Ring, einer Scheibe, einem Hohlzylinder, einem Stumpfkegel, einem Formteil, welches einen Wulst auf der Anschlagseite aufweist oder Kombination hiervon. Das Material des Dämpfungselements ist beispielsweise Gummi, Kautschuk, Polymere, insbesondere Polyurethan, TPE, NBR, SBR, EPDM, NR, Gummimetallverbindungen und deren Zusammensetzung oder Kombinationen hiervon.

In einer bevorzugten Ausführungsform der Erfindung weist das kolbenstangenferne Ende des Einrohrschwingungsdämpfers einen im Vergleich zu dem Dämpferrohr kleineren Außendurchmesser auf.

Gemäß der Erfindung weist das kolbenstangenferne Ende des Einrohrschwingungsdämpfers zusätzlich mindestens ein Fixierelement, insbesondere einen O-Ring, auf, wobei das Fixierelement in einem Bereich zwischen dem Anschlagteller und dem kolbenstangenfernen Ende des Einrohrschwingungsdämpfers angeordnet ist.

Im Rahmen der vorliegenden Erfindung wird unter einem Fixierelement ein Element verstanden, welches den Anschlagteller gegenüber dem kolbenstangenfernen Ende des Einrohrschwingungsdämpfers fixiert. Des Weiteren kann das Dämpfungselement im Fahrbetrieb des Kraftfahrzeugs Abroll- und Straßengeräusche gegenüber der Karosserie isolieren. Beispielsweise sind Fixierelemente ausgewählt aus der Gruppe von Profilringen, insbesondere O-Ringen, Flachringen oder Kombination hiervon.
Das Material des Fixierelements ist beispielsweise Gummi, Kautschuk, Polymere, insbesondere Polyurethan und deren Zusammensetzung und Kombinationen hiervon.
Nach einer weiteren Ausführungsform der Erfindung weist der Anschlagteller mindestens eine geometrische Oberflächenstruktur zur Aufnahme und wenigstens formschlüssigen Positionierung des mindestens einen Dämpfungselementes an dem Anschlagteller auf.

Unter einer geometrischen Oberflächenstruktur wird im Rahmen der vorliegenden Erfindung eine Struktur der Oberfläche des Anschlagtellers verstanden, welche die Einleitung von Kräften in das mindestens eine Dämpfungselement ermöglicht. Beispielsweise kann eine geometrische Oberflächenstruktur einer an dem Anschlagteller angebrachte Fase, insbesondere eine rechtwinklig oder auch unter einem Winkel angeordnete Fase oder Kombination hiervon sein.

Gemäß einer weiteren Ausführungsform der Erfindung weist der Anschlagteller mindestens eine Aufnahmeeinrichtung für eine Schutzhülse insbesondere eine Fase in einem Randbereich des Anschlagtellers auf, wobei an der mindestens einen Fase zusätzlich mindestens eine Schutzhülse angeordnet ist. Unter einer Aufnahmeeinrichtung für eine Schutzhülse wird im Rahmen der vorliegenden Erfindung eine Einrichtung verstanden, welche eine Schutzhülse sicher und stabil hält. Beispielsweise kann eine Aufnahmeeinrichtung für eine Schutzhülse eine Fase, ein Absatz, eine Nutkontur, eine Andrehung oder Kombination hiervon sein.

Im Rahmen der vorliegenden Erfindung wird unter einer Schutzhülse eine Schutzvorrichtung insbesondere gegen Schmutz und Steinschlag mit einer hülsenartigen Geometrie verstanden. Beispielhafte Ausführungsformen einer Schutzhülse können ein Schutzrohr, insbesondere mit einer ebenen Mantelfläche, ein Faltenbalg oder Kombination hiervon sein.

In einer weiteren Ausführungsform der Erfindung weist das mindestens eine Dämpfungselement eine Dicke im Bereich von 0,1 bis 80 mm, vorzugsweise im Bereich von 0,5 bis 10 mm, besonders bevorzugt im Bereich von1 bis 8 mm, ganz besonders bevorzugt im Bereich von 1,5 bis 4 mm auf.
Gemäß einer weiteren Ausführungsform der Erfindung weist das mindestens eine Dämpfungselement eine Härte in einem Bereich von 40 bis 90 Shore nach DIN ISO 7619-1, Februar 2012, auf. Die geometrische Maßprüfung, insbesondere Maßabweichung, wird nach DIN ISO 3302 aus dem Jahrgang Oktober 1999 bestimmt.

Nach einer weiteren Ausführungsform der Erfindung ist das mindestens eine Dämpfungselement zumindest teilweise stoffschlüssig verbunden mit dem Anschlagteller. Beispielsweise ist eine stoffschlüssige Verbindung einer Verklebung, verschweißen, Vulkanisation.

Gemäß einer weiteren Ausführungsform des Domlagers ist die mindestens eine Anschlagfläche zum Anschlagen des mindestens einen Dämpfungselements in Konstruktionslage zu dem mindestens einen Dämpfungselement beabstandet angeordnet, weist insbesondere einen Abstand von kleiner-gleich 15mm, vorzugsweise von kleiner als 6mm, besonders bevorzugt von kleiner als 4mm, ganz besonders bevorzugt von kleiner als 2mm auf.

Unter einer Domlageranordnung wird im Rahmen der vorliegenden Erfindung auch ein Domlager verstanden. Im Rahmen der vorliegenden Erfindung wird unter einer Konstruktionslageder Abstand zwischen Karosserie und eines ebenen Untergrundes, auf welchem ein Fahrzeug steht, insbesondere eine Fahrbahn verstanden, wobei das Fahrzeug ohne Beladung auf dem ebenen Untergrund steht und der herstellerspezifische Reifendruck an den Reifen des Fahrzeugs eingestellt ist, verstanden.

### Kurze Beschreibung der Zeichnungen

Der erfindungsgemäße Einrohrschwingungsdämpfer und die Domlageranordnung werden anhand der Zeichnungen erläutert.

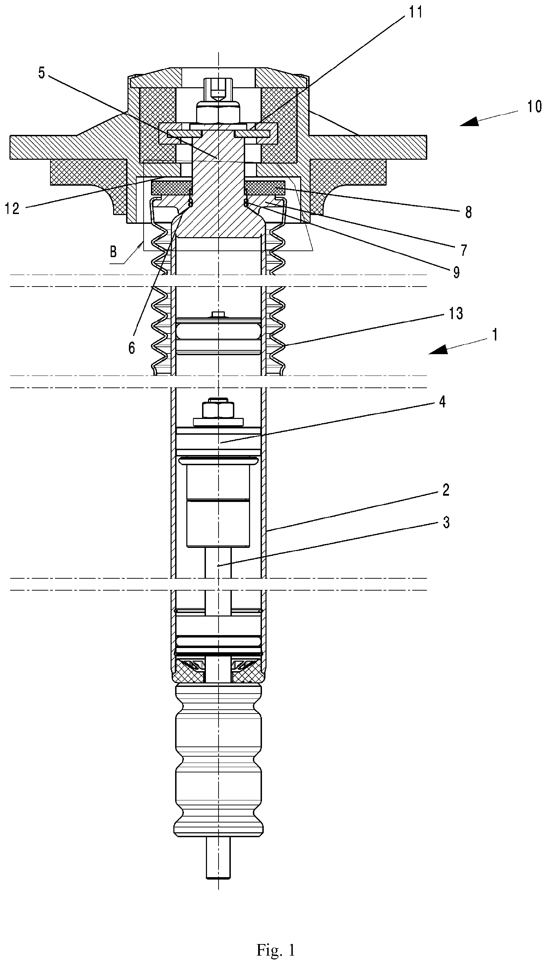

Fig. 1 zeigt schematisch einen Längsschnitt durch einen erfindungsgemäßen Einrohrschwingungsdämpfer und ein Domlager gemäß einer Ausführungsform.

In der Fig. 1 ist ein Längsschnitt durch einen Einrohrschwingungsdämpfer 1 und ein Domlager 10 gemäß einer Ausführungsform der Erfindung dargestellt. Der Einrohrschwingungsdämpfer 1 zeigt ein Dämpferrohr 2 in dem eine Kolbenstange 3 hin und her bewegbar angeordnet ist, wobei mit der Kolbenstange 3 ein Arbeitskolben 4 mitbewegbar ist. Der Arbeitskolben 4 unterteilt den Innenraum des Dämpferrohres 2 in einen kolbenstangeseitigen Arbeitsraum und einen kolbenstangenfernen Arbeitsraum. Zudem ist ein kolbenstangenfernes Ende 5 des Einrohrschwingungsdämpfer 1 mit einem Übergangsbereich von dem Außendurchmesser des Dämpferrohrs 2 zu dem Außendurchmesser des kolbenstangenfernen Ende 5 des Einrohrschwingungsdämpfers 1 dargestellt. Das kolbenstangenferne Ende 5 des Einrohrschwingungsdämpfers 1 zeigt einen in dem Übergangsbereich angeordneten Auflagebereich 6, einen Anschlagteller 7 und ein Dämpfungselement 8. Der Anschlagteller 7 ist an dem Auflagebereich 6 angeordnet dargestellt. Das Dämpfungselement 8 ist an dem Anschlagteller 7 auf der dem kolbenstangenfernen Ende des Einrohrschwingungsdämpfers zugewandten Seite angeordnet dargestellt. Der Anschlagteller 7 weist im Randbereich beispielhaft eine Aufnahmeeinrichtung für eine Schutzhülse 13, als eine Fase dargestellt, auf, an welcher die Schutzhülse 13, wie dargestellt, angeordnet ist. In dem Bereich zwischen dem Anschlagteller 7 und dem kolbenstangenfernen Ende 5 des Einrohrschwingungsdämpfers 1 ist ein Fixierelement 9, beispielsweise als O-Ring dargestellt, angeordnet. Das Domlager 10 zum Lagern des kolbenstangenfernen Ende 5 des Einrohrschwingungsdämpfers 1 zeigt eine Befestigungsvorrichtung 11 zur lagernden Befestigung des kolbenstangenfernen Ende 5 des Einrohrschwingungsdämpfers 1 in dem Domlager 10 und eine Anschlagfläche 12. Das Dämpfungselement 8 ist beabstandet zu der Anschlagfläche 12 dargestellt, was dem Nicht-Fahrbetrieb des Kraftfahrzeuges, insbesondere der Konstruktionslage des Kraftfahrzeuges entspricht.

### Gewerbliche Anwendbarkeit

Einrohrschwingungsdämpfer und Domlager der vorbeschriebenen Art für Fahrzeuge werden in der Produktion von Fahrzeugen, insbesondere von Fahrwerken von Kraftfahrzeuge eingesetzt.

### Bezugszeichenliste

- 1: = Einrohrschwingungsdämpfer
- 2: = Dämpferrohr
- 3: = Kolbenstange
- 4: = Arbeitskolben
- 5: = kolbenstangenfernes Ende des Einrohrschwingungsdämpfers
- 6: = Auflagebereich
- 7: = Anschlagteller
- 8: = Dämpfungselement
- 9: = Fixierelement
- 10: = Domlager
- 11: = Befestigungsvorrichtung
- 12: = Anschlagfläche
- 13: = Schutzhülse

## Patentansprüche

1. Einrohrschwingungsdämpfer (1) für ein Kraftfahrzeug, umfassend
- ein mindestens teilweise mit Dämpfungsflüssigkeit gefülltes Dämpferrohr (2), in dem eine Kolbenstange (3) hin und her bewegbar ist, wobei mit der Kolbenstange (3) ein Arbeitskolben (4) mitbewegbar ist,
- ein kolbenstangenfernes Ende (5) des Einrohrschwingungsdämpfers (1) zum Lagern in einem Domlager (10), wobei das kolbenstangenferne Ende (5) des Einrohrschwingungsdämpfers (1) einen Übergangsbereich von dem Außendurchmesser des Dämpferrohrs (2) zu dem Außendurchmesser des kolbenstangenfernen Endes (5) des Einrohrschwingungsdämpfers (1) aufweist,
wobei das kolbenstangenferne Ende (5) des Einrohrschwingungsdämpfers (1) einen in dem Übergangsbereich angeordneten Auflagebereich (6) aufweist und der Einrohrschwingungsdämpfer (1) zusätzlich einen Anschlagteller (7) und mindestens ein Dämpfungselement (8) umfasst, und wobei der Anschlagteller (7) an dem Auflagebereich (6) angeordnet ist und das mindestens eine Dämpfungselement (8) an dem Anschlagteller (7) auf der dem kolbenstangenfernen Ende (5) des Einrohrschwingungsdämpfers (1) zugewandten Seite angeordnet ist
**dadurch gekennzeichnet, dass**
das kolbenstangenferne Ende (5) des Einrohrschwingungsdämpfers (1) zusätzlich mindestens ein Fixierelement (9) aufweist, wobei das Fixierelement (9) in einem Bereich zwischen dem Anschlagteller (7) und dem kolbenstangenfernen Ende (5) des Einrohrschwingungsdämpfers (1) angeordnet ist.

2. Einrohrschwingungsdämpfer (1) nach Anspruch 1, **dadurch gekennzeichnet, dass** das Fixierelement (9) ein O-Ring ist.

3. Einrohrschwingungsdämpfer (1) nach Anspruch 1 oder 2, **dadurch gekennzeichnet, dass** das kolbenstangenferne Ende (5) des Einrohrschwingungsdämpfers (1) einen im Vergleich zu dem Dämpferrohr (2) kleineren Außendurchmesser aufweist.

4. Einrohrschwingungsdämpfer (1) nach einem der Ansprüche 1 bis 3, **dadurch gekennzeichnet, dass** das der Anschlagteller (7) mindestens eine geometrische Oberflächenstruktur zur Aufnahme und wenigstens formschlüssigen Positionierung des mindestens einen Dämpfungselement (8) an dem Anschlagteller (7) aufweist.

5. Einrohrschwingungsdämpfer (1) nach Anspruch 4, **dadurch gekennzeichnet, dass** der Anschlagteller (7) mindestens eine Aufnahmeeinrichtung für eine Schutzhülse (13) aufweist, insbesondere eine Fase in einem Randbereich des Anschlagtellers (7) aufweist, wobei an der mindestens einen Fase zusätzlich mindestens eine Schutzhülse (13) angeordnet ist.

6. Einrohrschwingungsdämpfer (1) nach einem der Ansprüche 1 bis 5, **dadurch gekennzeichnet, dass** das mindestens eine Dämpfungselement (8) eine Dicke im Bereich von 0,1 bis 80 mm, vorzugsweise im Bereich von 0,5 bis 10 mm, besonders bevorzugt im Bereich von1 bis 8 mm, ganz besonders bevorzugt im Bereich von 1,5 bis 4 mm aufweist.

7. Einrohrschwingungsdämpfer (1) nach einem der Ansprüche 1 bis 6, **dadurch gekennzeichnet, dass** das mindestens eine Dämpfungselement (8) eine Härte in einem Bereich von 40 bis 90 Shore nach DIN ISO 7619-1, Februar 2012, aufweist.

8. Einrohrschwingungsdämpfer (1) nach einem der Ansprüche 1 bis 7, **dadurch gekennzeichnet, dass** das mindestens eine Dämpfungselement (8) zumindest teilweise stoffschlüssig verbunden ist mit dem Anschlagteller (7).

## Claims

1. Single-tube oscillation damper (1) for a motor vehicle, comprising
- a damper tube (2) which is at least partially filled with damping fluid and in which a piston rod (3) can be moved back and forth, wherein a working piston (4) can also be moved with the piston rod (3),
- an end (5) of the single-tube oscillation damper (1) remote from the piston rod for bearing in a dome bearing (10), wherein the end (5) of the single-tube oscillation damper (1) remote from the piston rod comprises a transition region from the outer diameter of the damper tube (2) to the outer diameter of the end (5) of the single-tube oscillation damper (1) remote from the piston rod,
wherein the end (5) of the single-tube oscillation damper (1) remote from the piston rod comprises a support region (6) which is arranged in the transition region and the single-tube oscillation damper (1) additionally comprises a stop plate (7) and at least one damping element (8), and wherein the stop plate (7) is arranged on the support region (6) and the at least one damping element (8) is arranged on the stop plate (7) at the side facing the end (5) of the single-tube oscillation damper (1) remote from the piston rod,
**characterized in that**
the end (5) of the single-tube oscillation damper (1) remote from the piston rod additionally comprises at least one fixing element (9), wherein the fixing element (9) is arranged in a region between the stop plate (7) and the end (5) of the single-tube oscillation damper (1) remote from the piston rod.

2. Single-tube oscillation damper (1) according to Claim 1, **characterized in that** the fixing element (9) is an O-ring.

3. Single-tube oscillation damper (1) according to Claim 1 or 2, **characterized in that** the end (5) of the single-tube oscillation damper (1) remote from the piston rod comprises a smaller outer diameter compared with the damper tube (2).

4. Single-tube oscillation damper (1) according to one of Claims 1 to 3, **characterized in that** the stop plate (7) comprises at least one geometric surface structure for receiving and at least positive-locking positioning of the at least one damping element (8) on the stop plate (7).

5. Single-tube oscillation damper (1) according to Claim 4, **characterized in that** the stop plate (7) comprises at least one receiving device for a protective sleeve (13), in particular comprises a chamfer in an edge region of the stop plate (7), wherein at least one protective sleeve (13) is additionally arranged on the at least one chamfer.

6. Single-tube oscillation damper (1) according to one of Claims 1 to 5, **characterized in that** the at least one damping element (8) has a thickness in the range from 0.1 to 80 mm, preferably in the range from 0.5 to 10 mm, in a particularly preferred manner in the range from 1 to 8 mm, quite particularly preferably in the range from 1.5 to 4 mm.

7. Single-tube oscillation damper (1) according to one of Claims 1 to 6, **characterized in that** the at least one damping element (8) has a hardness in a range from 40 to 90 Shore in accordance with DIN ISO 7619-1, February 2012.

8. Single-tube oscillation damper (1) according to one of Claims 1 to 7, **characterized in that** the at least one damping element (8) is at least partially connected to the stop plate (7) in a materially integral manner.

## Revendications

1. Amortisseur de vibrations monotube (1) pour un véhicule automobile, comprenant :
- un tube d'amortisseur (2) rempli au moins en partie avec un liquide d'amortissement, dans lequel une tige de piston (3) peut être déplacée en va et vient, un piston de travail (4) pouvant être entraîné conjointement avec la tige de piston (3),
- une extrémité (5) de l'amortisseur de vibrations monotube (1) éloignée de la tige de piston, pour le support dans un palier de jambe élastique (10), l'extrémité (5) de l'amortisseur de vibrations monotube (1) éloignée de la tige de piston présentant une région de transition du diamètre extérieur du tube d'amortisseur (2) au diamètre extérieur de l'extrémité (5) de l'amortisseur de vibrations monotube (1) éloignée de la tige de piston,
l'extrémité (5) de l'amortisseur de vibrations monotube (1) éloignée de la tige de piston présentant une région d'appui (6) disposée dans la région de transition, et l'amortisseur de vibrations monotube (1) présentant en outre un plateau de butée (7) et au moins un élément d'amortissement (8), et le plateau de butée (7) étant disposé sur la région d'appui (6) et l'au moins un élément d'amortissement (8) étant disposé sur le plateau de butée (7) sur le côté tourné vers l'extrémité (5) de l'amortisseur de vibrations monotube (1) éloignée de la tige de piston,
**caractérisé en ce que**
l'extrémité (5) de l'amortisseur de vibrations monotube (1) éloignée de la tige de piston présente en outre au moins un élément de fixation (9), l'élément de fixation (9) étant disposé dans une région entre le plateau de butée (7) et l'extrémité (5) de l'amortisseur de vibrations monotube (1) éloignée de la tige de piston.

2. Amortisseur de vibrations monotube (1) selon la revendication 1, **caractérisé en ce que** l'élément de fixation (9) est un joint torique.

3. Amortisseur de vibrations monotube (1) selon la revendication 1 ou 2, **caractérisé en ce que** l'extrémité (5) de l'amortisseur de vibrations monotube (1) éloignée de la tige de piston présente un diamètre extérieur inférieur à celui du tube d'amortisseur (2).

4. Amortisseur de vibrations monotube (1) selon l'une quelconque des revendications 1 à 3, **caractérisé en ce que** le plateau de butée (7) présente au moins une structure de surface géométrique pour recevoir et positionner au moins par engagement par correspondance de formes l'au moins un élément d'amortissement (8) sur le plateau de butée (7).

5. Amortisseur de vibrations monotube (1) selon la revendication 4, **caractérisé en ce que** le plateau de butée (7) présente au moins un dispositif de réception pour une douille de protection (13), en particulier un biseau dans une région de bord du plateau de butée (7), au moins une douille de protection (13) étant en outre disposée au niveau de l'au moins un biseau.

6. Amortisseur de vibrations monotube (1) selon l'une quelconque des revendications 1 à 5, **caractérisé en ce que** l'au moins un élément d'amortissement (8) présente une épaisseur de l'ordre de 0,1 à 80 mm, de préférence de l'ordre de 0,5 à 10 mm, particulièrement préférablement de l'ordre de 1 à 8 mm, tout particulièrement préférablement de l'ordre de 1,5 à 4 mm.

7. Amortisseur de vibrations monotube (1) selon l'une quelconque des revendications 1 à 6, **caractérisé en ce que** l'au moins un élément d'amortissement (8) présente une dureté de l'ordre de 40 à 90 Shore selon DIN ISO 7619-1, février 2012.

8. Amortisseur de vibrations monotube (1) selon l'une quelconque des revendications 1 à 7, **caractérisé en ce que** l'au moins un élément d'amortissement (8) est connecté au moins en partie par liaison de matière au plateau de butée (7).
